# EUROPÄISCHE PATENTSCHRIFT

(11) **EP 1 117 503 B1**
(45) Veröffentlichungstag und Bekanntmachung des Hinweises auf die Patenterteilung: **26.11.2003**
(21) Anmeldenummer: 98952674.4
(22) Anmeldetag: 30.09.1998
(51) Int. Cl.: B23K 26/08

(54) **VERFAHREN UND VORRICHTUNG ZUR MATERIALABTRAGUNG AUS EINER FLÄCHE EINES WERKSTÜCKS**
METHOD AND DEVICE FOR REMOVING MATERIAL FROM A SURFACE OF A WORK PIECE
PROCEDE ET DISPOSITIF D'ENLEVEMENT DE MATIERE SUR UNE SURFACE D'UNE PIECE

(43) Veröffentlichungstag der Anmeldung: 25.07.2001
(73) Patentinhaber: Lasertec GmbH, 87459 Pfronten (DE)
(72) Erfinder: WRBA, Peter, D-87647 Unterthingau (DE); HILDEBRAND, Peter, D-87484 Nesselwang (DE); KUHL, Michael, D-87629 Füssen (DE); REISACHER, Martin, D-87439 Kempten (DE)
(74) Vertreter: Beetz & Partner Patentanwälte
(86) Internationale Anmeldenummer: EP9806217
(87) Internationale Veröffentlichungsnummer: WO00018535

(56) Entgegenhaltungen:
- DE-A- 4 209 933
- US-A- 4 914 270

## Beschreibung

Die Erfindung betrifft ein Verfahren und eine Vorrichtung zur Materialabtragung aus einer Fläche eines Werkstücks gemäß den Oberbegriffen der unabhängigen Ansprüche. Ein Verfahren zur Oberflächenbearbeitung ist aus der US-A-4 914 270 sowie der DE 42 09 933 bekannt.

Ein für komplexe Formen geeignetes Herstellungsverfahren ist es, aus dem vollen heraus Material entsprechend der gewünschten Form abzutragen. Dabei kann entweder die entstehende Vertiefung das zuletzt gewünschte Endprodukte sein (beispielsweise für eine Gußform), oder das verbliebene Material kann einem herzustellenden Teil entsprechen. Eine Art des Materialabtrags für insbesondere feine Strukturen ist die mittels eines Laserstrahls.

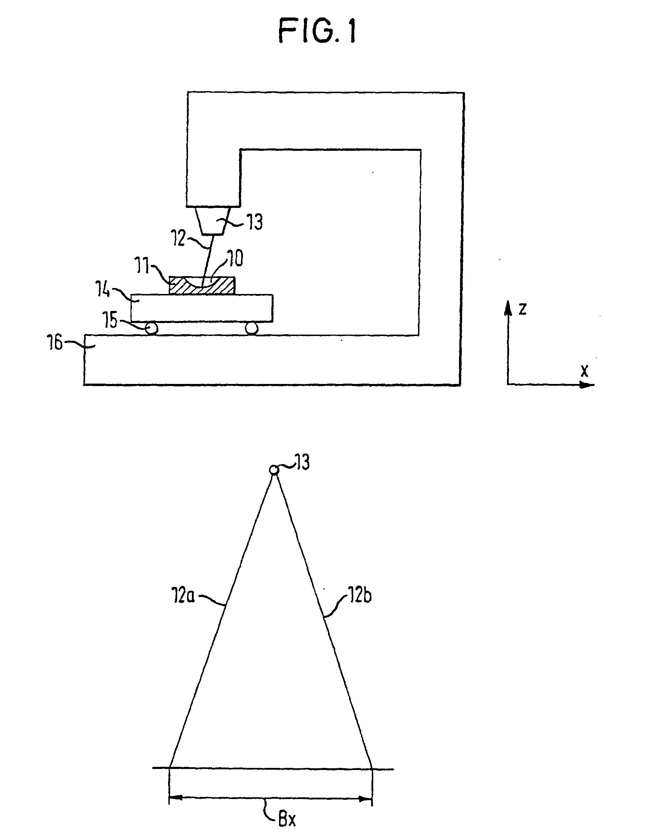

Fig. 1 zeigt eine entsprechende Vorrichtung schematisch. Ein Ständer 16 weist einen festen oder verschieblichen Werkstücktisch 14 auf, auf dem sich ein Werkstück 11 befindet. Ebenfalls am Ständer 16 befestigt ist ein Laserkopf 13, der einen Laserstrahl 12 emittiert, um damit im Werkstück 11 ein Gesenke 10 zu erzeugen. Der Materialabtrag erfolgt jeweils aus der gerade zugänglichen Fläche/Oberfläche des Werkstücks. Der vergleichsweise hochenergetische Laserstrahl bestrahlt die gerade zugängliche Werkstückoberfläche und führt dort zu einer Verdampfung bzw. zum Schmelzen des Werkstückmaterials. In der Regel erfolgt der Abtrag schichtweise. Der Laserstrahl wird mittels einer Laserstrahlführung abtastend über die Werkstückoberfläche geführt, beispielsweise so, daß er mäandernd die Oberfläche überstreicht und dabei eine Schicht entsprechend gewünschten Grenzen durch Aufschmelzen und Verdampfen abträgt.

In Fig. 1 ist schematisch die x- und z-Koordinate angedeutet. Die y-Koordinate sticht nach unten durch die Zeichnungsebene. Die Schichten, in denen der Abtrag erfolgt, liegen jeweils im wesentlichen in der x-y-Ebene auf unterschiedlichen Positionen der z-Achse.

Konstruktionsbedingt ist der Arbeitsbereich der Vorrichtung in der Regel eingeschränkt. Beispielsweise kann der Laserstrahl nicht beliebig weit geführt bzw. ausgelenkt werden. In Fig. 1 ist dies unten schematisch dargestellt. Durch 13 wird die Laserlichtquelle symbolisiert. 12a und 12b bezeichnen jeweils die weitestmöglichen Auslenkungen des Laserstrahls in x-Richtung (beispielsweise durch Spiegel). Er kann dann in x-Richtung maximal einen Bereich Bx überstreichen. Sinngemäße Überlegungen gelten für die y-Richtung. Die Vorrichtung hat dadurch einen Bearbeitungsbereich B, der üblicherweise rechtwinklig begrenzt ist und in x-Richtung eine Abmessung Bx und in y-Richtung eine Abmessung By hat.

Wenn der Materialabtrag in einem Bereich des Werkstücks 11 erfolgen soll, der größer als der Bearbeitungsbereich Bx, By ist, ist es prinzipiell möglich, nach dem Abtrag einer Schicht im einen Bearbeitungsbereich die Relativposition von Werkstück 11 und Laserkopf 13 zu verändern. Dadurch verschiebt sich die Lage des Bearbeitungsbereichs auf dem Werkstück in geeigneter Weise, so daß nun ein weiterer Bereich auf dem Werkstück bearbeitet werden kann.

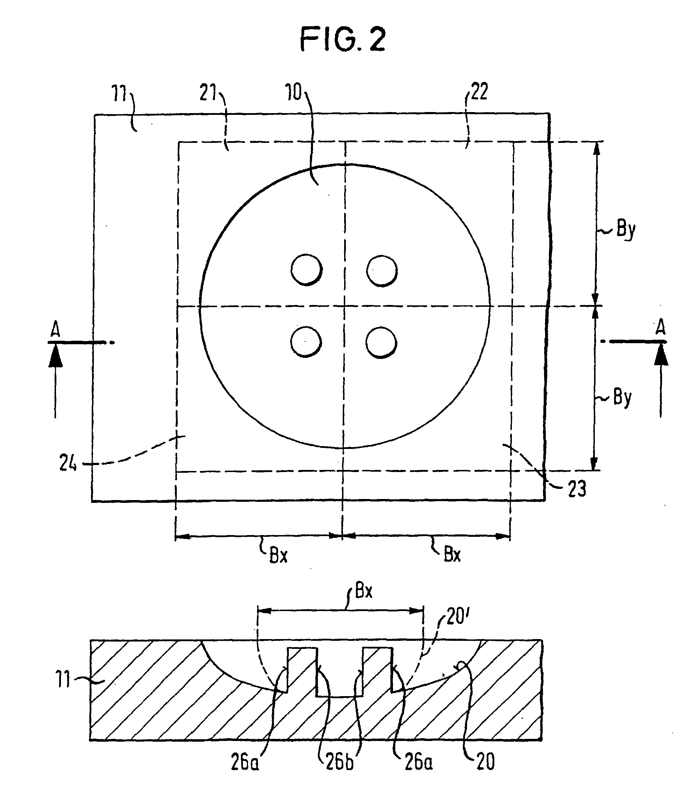

In Fig. 2 ist dies schematisch gezeigt. Fig. 2 zeigt in Draufsicht und als Schnitt ein herzustellendes Gesenk 10. Beispielhaft angenommen wird eine flache Schüssel, in der vier Säulen stehenbleiben. Die Negativform ähnelt einem großen Knopf. Mit 21-24 sind vier Positionierungen für den Bearbeitungsbereich der Vorrichtung gezeigt. Sie sind so gewählt, daß sie unmittelbar aneinanderliegen und in Kombination die gewünschte Fläche abdecken. Jeder der Bearbeitungsbereiche hat die Abmessungen Bx und By. Somit ergibt sich ein erstes Kriterium, das eine Veränderung der Relativposition zwischen Werkstück 11 und Laserkopf 13 notwendig macht. Es entspricht der Notwendigkeit der Verschiebung des Bearbeitungsbereichs relativ zum Werkstück so, daß eine Werkstückfläche bearbeitet werden kann, die so groß ist, daß sie nicht vollständig in den Bearbeitungsbereich der Vorrichtung paßt.

Ein weiteres Kriterium zur Veränderung der Relativposition wird bezugnehmend auf das Schnittbild in Fig. 2 erläutert. Bezugsziffer 20 bezeichnet die Kontur des oben in Draufsicht gezeigten Gesenks. Nimmt man aber ein kleineres Gesenk an, wie es beispielsweise durch die gestrichelte Kontur 20' angedeutet ist, würde ein solcher Werkstückbereich durchaus in den Bearbeitungsbereich Bx, By der Vorrichtung passen. Gleichwohl können dann Probleme dahingehend auftreten, daß gewisse Bereiche für das Laserlicht abgeschattet sein können. Im Schnittbild der Fig. 2 ist dies bei den Bereichen 26a der Fall, wenn man sich die Lichtquelle als mittig über dem Gesenk stehend denkt. Andere Bereiche 26b können u.U. das Laserlicht unter einem so schleifenden Schnitt empfangen, daß definierte Abtragungsverhältnisse nicht mehr eingestellt werden können. Somit kann es auch bei "kleinen" Gesenken wünschenswert sein, die Relativposition zu ändern, um Abschattungen zu vermeiden und/oder um geeignete Auftreffwinkel des Laserlichts auf Wandungen des Gesenks zu erhalten. Nochmals zurückgehend zu Fig. 1 unten kann dies dahingehend umformuliert werden, daß die Veränderung der Relativposition dahingehend wünschenswert ist, daß bestimmte Bearbeitungsstellen des Werkstücks in bestimmten Teilbereichen des Bearbeitungsbereichs Bx, By wünschenswert ist. Beispielsweise können mit dem rechten Bereich des Kegels in Fig. 1 unten die linken Wände der Säulen und die sich mit ihnen ergebenden Winkel am Boden des Gesenks vergleichsweise günstig erreicht werden, während mit dem linken Bereich des Kegels in Fig. 1 unten die rechten Wände der zu bildenden Säulen und die Winkel damit am Boden des Gesenks günstig erreicht werden können.

Die beiden Kriterien können kombiniert miteinander notwendig werden, beispielsweise bei der Herstellung des in Fig. 2 gezeigten Gesenks, das einerseits größer als der Bearbeitungsbereich ist und andererseits Abschattungen und vergleichsweise senkrechte Wände aufweist.

Wenn beim schichtweisen Abtrag nun die Relativpositionen nach Maßgabe der obengenannten Kriterien verschoben werden, können Probleme dahingehend auftreten, daß bestimmte Bearbeitungsstellen des Werkstücks immer im gleichen Bereich des Bearbeitungsbereichs der Vorrichtung liegen. Grundsätzlich ist nun davon auszugehen, daß die Bearbeitungseigenschaften und insbesondere die Genauigkeit nicht für den gesamten Bearbeitungsbereich Bx, By homogen ist. Kritisch sind hierbei insbesondere die Randbereiche, weil hier in irgendeiner Form Unstetigkeiten herrschen, sei es, weil der Laserstrahl an- bzw. ausgeschaltet wird oder weil die Bewegung in beispielsweise x-Richtung angehalten wird und eine Bewegung in y-Richtung aufgenommen wird. Diese Unstetigkeiten bewirken Fertigungsungenauigkeiten, die sich beim schichtweisen Aufbau des Gesenks nachteilig addieren können.

Aufgabe der Erfindung ist es, ein Verfahren und eine Vorrichtung zur Materialabtragung aus einer Fläche eines Werkstücks anzugeben, bei denen Herstellungsungenauigkeiten infolge ungleichmäßiger Abtragseigenschaften im Bearbeitungsbereich vermieden werden können.

Diese Aufgabe wird mit den Merkmalen der unabhängigen Ansprüche gelöst. Abhängige Ansprüche sind auf bevorzugte Ausführungsformen der Erfindung gerichtet.

Erfindungsgemäß wird die Relativpositionierung zwischen Werkstück und Bearbeitungskopf zusätzlich zu einem oder den beiden obengenannten Kriterien so eingestellt, daß die Grenzen des Bearbeitungsbereichs für gleiche Bearbeitungsstellen (bezüglich x- und y-Koordinate) auf unterschiedlichen Bereichen der Werkstückfläche zu liegen kommen.

Erfindungsgemäß wird dafür Sorge getragen, daß in einer tieferen Schicht die Bearbeitungsbereichsgrenzen anders auf dem Werkstück liegen als in einer früheren Schicht. Dadurch können zwar nicht mögliche Ungleichmäßigkeiten innerhalb des Bearbeitungsbereichs vermieden werden. Die Ungleichmäßigkeiten addieren sich jedoch nicht, sondern mitteln sich durch die Grenzverschiebung zum einen heraus und können zum anderen regelungstechnisch aufgefangen werden.

Bezugnehmend auf die Zeichnungen werden nun einzelne Ausführungsformen der Erfindung beschrieben, es zeigen:
Fig. 1 eine Vorrichtung, in der die Erfindung angewendet werden kann,
Fig. 2 ein Beispiel für ein herzustellendes Gesenk,
Fig. 3 schematisch die erfindungsgemäße Positionierung der Bearbeitungsbereiche in unterschiedlichen Schichten,
Fig. 4 ein weiteres Beispiel der erfindungsgemäßen Positionierung der Bearbeitungsbereiche in den unterschiedlichen Schichten, und
Fig. 5 eine schematische Darstellung zur Erläuterung von Überlegungen hinsichtlich der Positionierung des Bearbeitungsbereichs.

Fig. 1 wurde schon einleitend erläutert. In ihr kann die Erfindung angewendet werden, indem sie beispielsweise in einer nicht gezeigten Steuerung bzw. Regelung implementiert wird. Die Relativposition zwischen Laserkopf 13 und Werkstück 11 kann prinzipiell beispielsweise dadurch verändert werden, daß das Werkstück 11 auf einen verfahrbaren Werkstücktisch 14 gelegt wird. Die Position des Werkstücktischs 14 kann in x- und y-Richtung steuer- bzw. regelbar sein. Statt dessen oder zusätzlich hierzu kann auch der Laserkopf 13 im Vergleich zum Ständer 16 in x- und y-Richtung steuer- bzw. regelbar verschieblich sein.

Wenn nun zur Herstellung eines Gesenks 10 die Relativposition zwischen Werkstück 11 und Laserkopf 13 verschoben werden muß (um ein Werkstück herzustellen, das nicht vollständig in den Bearbeitungsbereich Bx, By der Vorrichtung paßt und/oder um Abschattungen bzw. ungünstige Einfallswinkel des Laserstrahls 12 auf der Werkstückswandung zu vermeiden), wird darüber hinaus die Relativposition so eingestellt, daß in unterschiedlichen Schichten die Grenzen des Bearbeitungsbereichs auf unterschiedlichen Bereichen der Werkstückfläche zu liegen kommen.

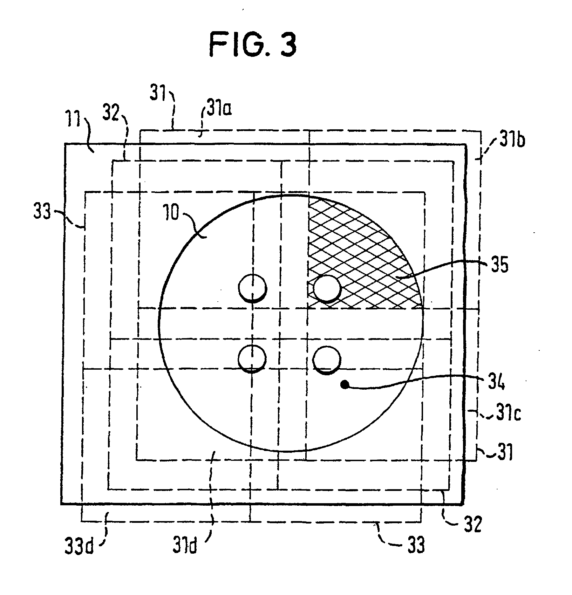

In Fig. 3 ist dies schematisch dargestellt. Es wird vom gleichen Gesenk 10 wie in Fig. 2 ausgegangen. Die gestrichelten Strukturen 31, 32 und 33 zeigen jeweils Bearbeitungsbereichsgrenzen in unterschiedlichen Schichten des Gesenks. Beispielsweise kann die Positionierung wie folgt geschehen:

Zum Abtrag einer ersten Schicht werden die Bearbeitungsbereichsgrenzen entsprechend den gestrichelten Linien 31 eingestellt. Es ergeben sich dadurch vier Relativpositionierungen entsprechend den jeweiligen Lagen 31a, 31b, 31c und 31d des Bearbeitungsbereichs. Diese sind zueinander vorzugsweise so gewählt, daß sie unmittelbar aneinander angrenzen. Die einzelnen Relativpositionen entsprechend 31a-d werden nacheinander angesteuert bzw. eingestellt.

Wenn eine der Relativpositionen (z.B. 31b) eingestellt ist, erfolgt innerhalb dieses Bearbeitungsbereichs der Abtrag.

Die Laserstrahlführung und/oder der Laserstrahl selbst werden so angesteuert, daß innerhalb des Bearbeitungsbereichs 31b lediglich im rautig markierten Bereich 35 ein Materialabtrag erfolgt. Beispielsweise kann der Laserstrahl mäandernd über die Fläche geführt werden, wobei die Grenzen entsprechend dem abzutragenden Muster durch Tastung des Laserstrahls und/oder Begrenzung der Führung des Laserstrahls eingestellt werden können.

Nach Beendigung des Abtrags in einem Bearbeitungsbereich 31b wird der nächste Bearbeitungsbereich 31c eingestellt. Prinzipiell wiederholen sich dort die eben geschilderten Vorgänge. Danach wird der Bearbeitungsbereich 31d eingestellt, der als letzter Bearbeitungsbereich angenommen wird. Dann ist der Abtrag in einer Schicht beendet.

Für den Abtrag in der nächsttieferen Schicht können die Relativpositionen nun so gewählt werden, daß sich andere Grenzen für die Bearbeitungsbereiche ergeben, beispielsweise längs der gestrichelten Linien 32. Auch durch diese Grenzziehung wird das Gesenk im Laufe der Zeit vollständig überdeckt. Die Grenzen liegen jedoch in der tieferen Schicht anders als in der höheren. Damit liegen bezüglich ein- und derselben Bearbeitungsstelle (in x- und y-Richtung, z.B. 34 in Fig. 3) die Bearbeitungsbereichsgrenzen in einer Schicht anders als in einer vorherigen Schicht.

Verschiedene Strategien zur Verschiebung der Grenzen 31 bis 33 von Schicht zu Schicht sind denkbar. So kann beispielsweise ein alternierender Ansatz gewählt werden, bei dem die Grenzen von Schicht zu Schicht zwischen den Positionen 31 und 33 verschoben werden. Nicht für jede Schicht muß eine Grenzverschiebung erfolgen. Beispielsweise können mehrere Schichten mit der Grenzziehung 31, mehrere Schichten mit der Grenzziehung 32, mehrere Schichten mit der Grenzziehung 33 usw. ausgeführt werden. Die Grenzziehung kann systematisch oder zufallsgesteuert von einer Schicht zu nächsten verschoben werden, wobei dies jeweils unter Beachtung eines oder beider der eingangs genannten Kriterien zu erfolgen hat.

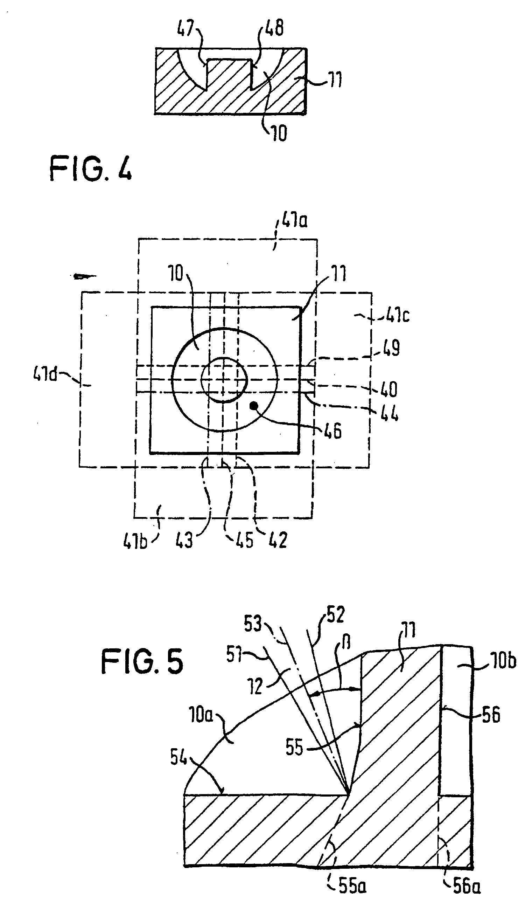

Fig. 4 zeigt schematisch ein Gesenk, dessen Abmessungen so angenommen werden, daß sie an sich innerhalb einer einzigen Positionierung des Bearbeitungsbereichs der Vorrichtung erreicht werden können. Gleichwohl sind steile Wandungen 47, 48 herzustellen, und der Zapfen kann zu Abschattungen unten am Boden des Gesenks führen. Deshalb werden auch hier Verschiebungen der Relativposition notwendig. Sie entsprechen dem eingangs genannten zweiten Kriterium. Für den Abtrag einer Schicht werden beispielsweise die Relativpositionen entsprechend 41a-d eingestellt, wobei 41a und 41b längs Grenze 40 aneinandergrenzen und 41c und 41d längs Grenze 45. Durch solche Grenzziehungen können die Wände des Zapfens jeweils an bestimmten Sektoren erreicht bzw. unter einem günstigeren Winkel bearbeitet werden. Nach Einstellung der Relativpositionen 41a-d ist die Bearbeitung einer Schicht abgeschlossen.

Für die Bearbeitung der nächsttieferen Schicht können die Grenzziehungen und insbesondere die gemeinsamen Grenzen im Vergleich zur vorherigen Schicht verschoben werden. Anstelle der "Naht" 40 zwischen 41a und 41b kann beispielsweise eine andere Position für die "Naht" gewählt werden, etwa längs Linie 49 und später längs Linie 44. Sinngemäß das gleiche gilt für die "Nähte" 42 und 43. Auch dadurch wird der kumulative Effekt ungleicher Bearbeitungscharakteristika im Bearbeitungsbereich der Vorrichtung vermieden.

46 bezeichnet eine Bearbeitungsstelle, die konstante x- und y-Koordinaten hat. Für diese gleiche Bearbeitungsstelle 46 im Gesenk werden mit Fortschreiten des Gesenks verschiedene Arbeitsbereichsgrenzen 40-45 eingestellt.

Fig. 5 zeigt die Überlegungen hinsichtlich Einfallswinkel des Laserstrahls. Der Laserstrahl ist mit 12 bezeichnet. In der Regel läßt er sich als konisches Werkzeug modellieren, weil es sich um ein auf die momentane Bearbeitungsposition fokussiertes Lichtbündel handelt. Der Konus ist durch die Grenzen 51 und 52 angedeutet. 53 entspricht seiner Mittelachse. 11 ist das Werkstück, 10a,b das herzustellende Gesenk, wobei 55 und 56 endgültige Wandungen des Gesenks sind, während 54 der momentane Boden ist. Die Gesenkwandungen 55, 56 finden im weiteren Verlauf ihre Fortsetzung gemäß den gestrichelten Linien 55a und 56a und erscheinen, wenn das Gesenk in die Tiefe vorgetrieben wird. Um die Wände 55 und 56 möglichst definiert herstellen zu können, ist es wünschenswert, daß der Eintreffwinkel des Laserstrahls nicht allzu schneidend längs der Wand 55 ist. Gezeigt ist ein Winkel β, der der Winkel zwischen Wandtangente im Arbeitspunkt und Mittenachse 53 des Laserstrahls sein soll. Die Relativpositionierung zwischen Werkstück und Bearbeitungskopf soll so sein, daß der Winkel β > 10°, vorzugsweise > 15° ist. Im Beispiel der Fig. 5 ist die Wand 56 mit der momentanen Relativpositionierung überhaupt nicht erreichbar. Sie ist abgeschattet und kann erst von einem Laserstrahl erreicht werden, wenn die Relativposition geändert wird.

Der Abtrag einer Schicht innerhalb eines Arbeitsbereichs erfolgt in der Regel alternierend zur Veränderung der Relativposition zwischen Werkstück und Bearbeitungskopf. Gleichwohl sind Lösungen denkbar, in denen die Veränderung der Relativpositionierung und der Abtrag in einer Schicht gleichzeitig ausgeführt werden.

Ganz allgemein kann somit gesagt werden, daß die Relativpositionierung zwischen Werkzeug und Werkstück zusätzlich zu sonstigen Kriterien so erfolgt, daß gleiche Stellen im Bearbeitungsbereich des Werkzeugs nicht immer über gleichen Bearbeitungspositionen im Werkstück liegen, wenn der Abtrag schichtweise erfolgt. Dadurch können kumulierende Fehler vermieden und ein Gesenk hoher Qualität erzeugt werden.

Beispielhaft werden nachfolgend einige typischen Zahlenwerte angegeben. Der schichtweise Abtrag erfolgt mit CO₂-Lasern in Schichtstärken von unter 1 mm, vorzugsweise unter 100 µm, bei YAG-Lasern vorzugsweise unter 10 µm. Die lichte Weite zwischen Kopf 13 und Werkstückoberfläche 11 liegt in der Regel unter 200 mm, vorzugsweise unter 150 mm. Die Abmessungen des Bearbeitungsbereichs sind in der Regel rechteckig, wobei die Seitenlängen Bx, By in der Regel kleiner 100 mm sind. Die Abmessungen des Werkstücks 11 in x- und y-Richtung sind prinzipiell beliebig, wenn Verschiebungen gemäß dem eingangs genannten ersten Kriterium zugelassen werden. Es können Gesenktiefen von wenigen µm bis vielen mm Tiefe erzeugt werden. Bei vergleichsweise feinen Bearbeitungsschritten ist heutzutage (1998) ein YAG-Laser vorzuziehen, insbesondere ein Neodym-YAG-Laser oder ein Q-Switch-YAG-Laser. CO₂-Laser eignen sich heute für mächtigere Schichtdicken, beispielsweise größer 100 µm.

Die Laserstrahlführung kann durch verschwenkbare Spiegel erfolgen, die einen Laserstrahl aus einer festen Laserstrahlquelle führen. Zwei Spiegel können so angeordnet sein, daß ihre jeweilige Verschwenkung die Bewegung des Leuchtflecks in x- bzw. y-Richtung bewirkt. Die gemeinsame Ansteuerung ermöglicht dann das Überstreichen des Bearbeitungsbereichs mit dem Leuchtfleck.

Die genannten Vorgänge werden durch eine elektronische und in der Regel digitale Steuerung angesteuert, gesteuert bzw. eingeregelt.

## Patentansprüche

1. Verfahren zur Materialabtragung aus einer Fläche eines Werkstücks (11), bei dem der Materialabtrag schichtweise durch Bestrahlen einer Bearbeitungsstelle (34, 46) auf der Werkstückfläche mit einem Laserstrahl (12) aus einem Bearbeitungskopf (13) erfolgt, wobei der schichtweise Abtrag mit Hilfe einer Laserstrahlführung erfolgt, die den Laser innerhalb eines durch die Vorrichtung vorgegebenen Bearbeitungsbereichs (Bx, By, 31a-d, 41a-d) über die Fläche des Werkstücks führt, mit
Positionierungsschritten, in denen nach Beginn des Materialabtrags die Relativposition von Werkstück (12) und Bearbeitungskopf (13) nach Maßgabe eines ersten und/oder zweiten Kriteriums verändert wird **dadurch gekennzeichnet, daß** die Relativposition so eingestellt wird daß eine Grenze (31-33, 40-45) des Bearbeitungsbereichs (Bx, By, 31a-d, 41a-d) für gleiche Bearbeitungsstellen (34, 46) auf unterschiedlichen Bereichen der Werkstückfläche zu liegen kommt.

2. Verfahren nach Anspruch 1, **dadurch gekennzeichnet, daß** das erste Kriterium die Veränderung der Relativposition zum Abdecken einer zu bearbeitenden Fläche des Werkstücks (11), die größer ist als der Bearbeitungsbereich, ist.

3. Verfahren nach Anspruch 2, **dadurch gekennzeichnet, daß** die Relativpositionierung so erfolgt, daß die Lage einer Grenze des Bearbeitungsbereichs in einer Schicht im Vergleich zu ihrer Lage in einer anderen Schicht verschoben ist.

4. Verfahren nach Anspruch 3, **dadurch gekennzeichnet, daß** innerhalb einer Schicht die Relativpositionierung so erfolgt, daß die Grenzen des Bearbeitungsbereichs in den unterschiedlichen Relativpositionen unmittelbar aneinander liegen.

5. Verfahren nach einem der vorherigen Ansprüche, **dadurch gekennzeichnet, daß** das zweite Kriterium die Veränderung der Relativposition zum Bearbeiten einer bestimmten Bearbeitungsstelle des Werkstücks in einem bestimmten Teilbereich des Bearbeitungsbereichs ist.

6. Verfahren nach Anspruch 5, **dadurch gekennzeichnet, daß** im Rahmen des zweiten Kriteriums der Auftreffwinkel (β) des Laserstrahls auf der Bearbeitungsstelle und/oder mögliche Abschattungen des Laserstrahls von der Bearbeitungsstelle berücksichtigt werden.

7. Verfahren nach Anspruch 6, **dadurch gekennzeichnet, daß** die Positionierung so erfolgt, daß der Auftreffwinkel (β) mindestens 10°, vorzugsweise mindestens 15° zur erzeugten Oberfläche eines durch den Materialabtrag erzeugten Gesenks beträgt

8. Verfahren nach einem der Ansprüche 1 bis 7, **dadurch gekennzeichnet, daß** die Positionierungsschritte und der Abtrag alternierend ausgeführt werden.

9. Verfahren nach einem der Ansprüche 1 bis 7, **dadurch gekennzeichnet, daß** die Positionierungsschritte und der Abtrag gleichzeitig ausgeführt werden.

10. Verfahren nach einem der vorherigen Ansprüche, **dadurch gekennzeichnet, daß** die Laserstrahlführung mittels drehbarer Spiegel erfolgt.

11. Vorrichtung zur Materialabtragung aus einer Fläche eines Werkstücks (11), insbesondere zur Durchführung des Verfahrens nach einem der vorherigen Ansprüche, wobei der Materialabtrag schichtweise durch Bestrahlen einer Bearbeitungsstelle (34, 46) auf der Werkstückfläche mit einem Laserstrahl (12) aus einem Bearbeitungskopf (13) erfolgt, mit einer Laserstrahlführung, die den Laserstrahl (12) innerhalb eines Bearbeitungsbereichs (Bx, By, 31a-d, 41a-d) über die Fläche des Werkstücks (11) führt, und einer Positionierungseinrichtung, die nach Beginn des Materialabtrags die Relativposition von Werkstück (11) und Bearbeitungskopf (13) nach Maßgabe eines ersten und/oder zweiten Kriteriums veränderen kann, dadurch gekenngeichnet, daß die Positionierungseinrichtung die Relativposition so einstellen kann, daß eine Grenze (31-33, 40-45) des Bearbeitungsbereichs (Bx, By, 31a-d, 41a-d) für gleiche Bearbeitungsstellen (34, 46) auf unterschiedlichen Bereichen der Werkstückfläche zu liegen kommt.

12. Vorrichtung nach Anspruch 11, **dadurch gekennzeichnet, daß** das erste Kriterium die Veränderung der Relativposition zum Abdecken einer zu bearbeitenden Fläche des Werkstücks (11), die größer ist als der Bearbeitungsbereich (Bx, By, 31a-d, 41a-d), ist .

13. Vorrichtung nach Anspruch 11 oder 12, **dadurch gekennzeichnet, daß** das zweite Kriterium die Veränderung der Relativposition zum Bearbeiten einer bestimmten Bearbeitungsstelle des Werkstücks (11) in einem bestimmten Teilbereich des Bearbeitungsbereichs (41a-d) ist.

14. Vorrichtung nach einem der Ansprüche 11 bis 13, **dadurch gekennzeichnet, daß** die Laserstrahlführung mittels drehbarer Spiegel erfolgt.

15. Vorrichtung nach einem der Ansprüche 11 bis 14, **dadurch gekennzeichnet, daß** der Bearbeitungsbereich (Bx, By, 31a-d, 41a-d) eine rechteckige Form hat.

16. Vorrichtung nach einem der Ansprüche 11 bis 15, **dadurch gekennzeichnet, daß** die Positionierungseinrichtung einen gegenüber einem Ständer (16) verschieblichen Werkstücktisch (14) aufweist.

17. Vorrichtung nach einem der Ansprüche 11 bis 16, **dadurch gekennzeichnet, daß** die Positionierungseinrichtung einen gegenüber einem Ständer (16) verschieblichen Laserkopf (13) aufweist.

18. Vorrichtung nach einem der Ansprüche 11 bis 17, **dadurch gekennzeichnet, daß** der Laser ein YAG-Laser oder ein CO2-Laser ist.

## Claims

1. Method for removing material from a surface of a work piece (11), wherein the material is removed layer by layer by irradiating a processing area (34, 36) on the surface of the work piece with a laser beam (12) emanating from a processing head (13), with the material being removed layer by layer using a laser beam guide which guides the laser across the surface of the work piece inside an ablation area (Bx, By, 31a-d, 41a-d) which is predetermined by the device, comprising
positioning steps in which the relative position of the work piece (11) and the processing head (13) are changed according to a first and/or second criterion once the removal of the material has started, and which are **characterized in that** the relative position is adjusted such that for identical ablation areas (34, 46) a boundary (31-33, 40-45) of the ablation area (Bx, By, 31 a-d, 41 a-d) is placed on different areas of the surface of the work piece.

2. The method according to claim 1, **characterized in that** the first criterion is the change of the relative position for covering an area to be processed of the work piece (11), which is larger than the ablation area.

3. The method according to claim 2, **characterized in that** the relative positioning is carried out such that the position of a boundary of the ablation area in one layer is shifted as compared to its position in another layer.

4. The method according to claim 3, **characterized in that** the relative positioning inside a layer is carried out such that the boundaries of the ablation area in the different relative positions lie directly adjacent to each other.

5. The method according to any one of the preceding claims, **characterized in that** the second criterion is the change of the relative position for processing a certain processing area of the work piece in a certain partial area of the ablation area.

6. The method according to claim 5, **characterized in that** within the frame of the second criterion the angle of incidence (β) of the laser beam on the processing area and/or possible shadings of the laser beam from the processing area are taken into consideration.

7. The method according to claim 6, **characterized in that** the positioning is carried out such that the angle of incidence (β) is at least 10°, preferably 15°, to the produced surface of a die produced by the removal of material.

8. The method according to any one of claims 1 to 7, **characterized in that** the positioning steps and the removal are carried out alternately.

9. The method according to any one of claims 1 to 7, **characterized in that** the positioning steps and the removal are carried out simultaneously.

10. The method according to any one of the preceding claims, **characterized in that** the laser beam is guided by means of rotatable mirrors.

11. A device for removing material from a surface of a work piece (11), in particular for carrying out the method according to any one of the preceding claims, with the material being removed layer by layer by irradiating a processing area (34, 36) on the surface of the work piece with a laser beam (12) emanating from a processing head (13), with a laser beam guide guiding the laser beam (12) across the surface of the work piece (11) inside an ablation area (Bx, By, 31a-d, 41a-d), with a positioning means being able to change the relative position of the work piece (11) and the processing head (13) according to a first and/or second criterion once the removal of the material has started, **characterized in that** the positioning means can adjust the relative position such that for identical processing areas (34, 36) a boundary (31-33, 40-45) of the ablation area (Bx, By, 31a-d, 41a-d) is placed on different areas of the surface of the work piece.

12. The device according to claim 11, **characterized in that** the first criterion is the change of the relative position for covering a surface to be processed of the work piece (11), which is larger than the ablation area (Bx, By, 31 a-d, 41a-d).

13. The device according to claim 11 or 12, **characterized in that** the second criterion is the change of the relative position in order for processing a certain processing area of the work piece (11) in a certain partial area of the ablation area (41a-d).

14. The device according to any one of claims 11 to 13, **characterized in that** the laser beam is guided by means of rotatable mirrors.

15. The device according to any one of claims 11 to 14, **characterized in that** the ablation area (Bx, By, 31a-d, 41a-d) has a rectangular shape.

16. The device according to any one of claims 11 to 15, **characterized in that** the positioning means has a working table (14) which is slidable in relation to a column (16).

17. The device according to any one of claims 11 to 16, **characterized in that** the positioning means has a laser head (13) which is slidable in relation to a column (16).

18. The device according to any one of claims 11 to 17, **characterized in that** the laser is a YAG laser or a CO₂ laser.

## Revendications

1. Procédé d'enlèvement de matière sur la surface d'une pièce (11), dans lequel l'enlèvement de matière s'effectue par couches par irradiation d'un site d'usinage (34, 46) sur la surface d'une pièce avec un rayon laser (12) émanant d'une tête d'usinage (13), où l'enlèvement par couches s'effectue à l'aide d'un guidage de rayon laser, qui guide le laser au-dessus de la surface de la pièce dans une zone d'usinage (Bx, By, 31a-d, 41a-d) définie par le dispositif, comprenant
des étapes de positionnement, dans lesquelles après le début de l'enlèvement de la matière, la position relative de la pièce (11) et de la tête d'usinage (13) se modifie en fonction d'un premier et/ou deuxième critère et **caractérisé en ce que**
la position relative est réglée de telle sorte qu'une limite (31-33, 40-45) de la zone d'usinage (Bx, By, 31a-d, 41a-d) vienne à se situer sur des zones différentes de la surface de la pièce pour des mêmes sites d'usinage (34, 46).

2. Procédé selon la revendication 1, **caractérisé en ce que** le premier critère est la modification de la position relative pour couvrir une surface à usiner de la pièce ( 11 ) qui est plus grande que la zone d'usinage.

3. Procédé selon la revendication 2, **caractérisé en ce que** le positionnement relatif s'effectue de sorte que la position d'une limite de la zone d'usinage dans une couche soit décalée par rapport à sa position dans une autre couche.

4. Procédé selon la revendication 3, **caractérisé en ce que**, dans une couche, le positionnement relatif s'effectue de sorte que les limites de la zone d'usinage dans les différentes positions relatives se situent immédiatement côte à côte.

5. Procédé selon l'une quelconque des revendications précédentes, **caractérisé en ce que** le deuxième critère est la modification de la position relative pour l'usinage d'un site d'usinage déterminé de la pièce dans une zone partielle définie de la zone d'usinage.

6. Procédé selon la revendication 5, **caractérisé en ce que**, dans le cadre du deuxième critère, l'angle d'incidence (β) du rayon laser sur le site d'usinage et/ou les zones d'ombre éventuelles du rayon laser par rapport au site d'usinage sont pris en compte.

7. Procédé selon la revendication 6, **caractérisé en ce que** le positionnement s'effectue de sorte que l'angle d'incidence (β) est égal au moins à 10°, de préférence au moins à 15° par rapport à la surface produite d'une pente réalisée par l'enlèvement de la matière.

8. Procédé selon l'une quelconque des revendications 1 à 7, **caractérisé en ce que** les étapes de positionnement et l'enlèvement sont exécutés en alternance.

9. Procédé selon l'une quelconque des revendications 1 à 7, **caractérisé en ce que** les étapes de positionnement et l'enlèvement sont exécutés simultanément.

10. Procédé selon l'une quelconque des revendications précédentes, **caractérisé en ce que** le guidage du rayon laser s'effectue au moyen d'un miroir rotatif.

11. Dispositif d'enlèvement de matière sur la surface d'une pièce (11), en particulier pour la réalisation du procédé selon l'une quelconque des revendications précédentes, où l'enlèvement de matière s'effectue par couches par irradiation d'un site d'usinage (34, 46) sur la surface d'une pièce avec un rayon laser (12) émanant d'une tête d'usinage (13), avec un guidage du rayon laser qui guide le rayon laser (12) au-dessus de la surface de la pièce (11) dans une zone d'usinage (Bx, By, 31 a-d, 41a-d) définie par le dispositif, un dispositif de positionnement, qui peut modifier, après le début de l'enlèvement de la matière, la position relative de la pièce (11) et de la tête d'usinage (13) en fonction d'un premier et/ou deuxième critère et **caractérisé en ce que** le dispositif de positionnement peut régler la position relative de telle sorte qu'une limite (31-33, 40-45) de la zone d'usinage (Bx, By, 31 a-d, 41 a-d) vienne à se situer sur des zones différentes de la surface de la pièce pour des mêmes sites d'usinage (34, 46).

12. Dispositif selon la revendication 11, **caractérisé en ce que** le premier critère est la modification de la position relative pour couvrir une surface à usiner de la pièce (11) qui est plus grande que la zone d'usinage (Bx, By, 31 a-d, 41a-d).

13. Dispositif selon la revendication 11 ou 12, **caractérisé en ce que** le deuxième critère est la modification de la position relative pour l'usinage d'un site d'usinage déterminé de la pièce (11) dans une zone partiellement définie de la zone d'usinage (41ad).

14. Dispositif selon l'une quelconque des revendications 11 à 13, **caractérisé en ce que** le guidage du rayon laser s'effectue au moyen d'un miroir rotatif.

15. Dispositif selon l'une quelconque des revendications 11 à 14, **caractérisé en ce que** la zone d'usinage (Bx, By, 31 a-d, 41 a-d) a une forme rectangulaire.

16. Dispositif selon l'une quelconque des revendications 11 à 15, **caractérisé en ce que** le système de positionnement présente une table porte-pièce (14) pouvant être déplacée par rapport à un support (16).

17. Dispositif selon l'une quelconque des revendications 11 à 16, **caractérisé en ce que** le système de positionnement présente une tête laser (13) pouvant être déplacée par rapport à un support (16).

18. Dispositif selon l'une quelconque des revendications 11 à 17, **caractérisé en ce que** le laser est un laser YAG ou un laser au CO₂.
